# FASCICULE DE BREVET EUROPEEN

(11) **EP 2 147 236 B1**
(45) Date de publication et mention de la délivrance du brevet: **22.05.2013**
(21) Numéro de dépôt: 08718233.3
(22) Date de dépôt: 26.03.2008
(51) Int. Cl.: F16J 15/06, F16J 15/10

(54) **JOINT D'ETANCHEITE ANTI-FEU**
FEUERFESTE DICHTUNG
FIRE-RESISTANT SEAL

(30) Priorité: 28.03.2007 BE 200700155
(43) Date de publication de la demande: 27.01.2010
(73) Titulaire: Eriks NV, 2260 Hoboken (BE)
(72) Inventeur: DE LEENER, René, B-1461 Ittre (BE)
(74) Mandataire: Pecher, Nicolas
(86) Numéro de dépôt international: PCT/EP2008/053566
(87) Numéro de publication internationale: WO 2008/125447

(56) Documents cités:
- EP-A- 1 293 709
- EP-B- 0 705 998
- US-A- 3 885 007
- US-A- 3 953 566

## Description

### OBJET DE L'INVENTION

La présente invention concerne le domaine des garnitures ou joints d'étanchéité pour brides pour assemblages boulonnés.

### ARRIERE-PLAN TECHNOLOGIQUE

Les joints d'étanchéité sont très connus dans la technique et sont constitués de manière générale soit d'un matériau qui résiste au feu, tel que du graphite expansé, soit d'un matériau qui a une résistance élevée à la contamination chimique, tel que du polytétrafluoroéthylène (PTFE). Le PTFE, pour ses caractéristiques, peut donc être utilisé dans des environnements chimiques durs qui dégradent normalement d'autres matériaux conventionnels, les élastomères, et les polymères.

On connaît plusieurs types de joints d'étanchéité comme par exemple les joints enroulés en spirale qui sont généralement constitués de couches alternées constituées d'une mince bande de métal, tel que de l'acier inoxydable, et d'une mince bande de matériau remplisseur doux non métallique qui, réunies, sont enroulées en spirale pour former un anneau circulaire ; et les joints plats qui sont constitués également de graphite expansé ou de PTFE ayant généralement un insert en acier inoxydable comme support. Cependant, dans certaines applications, telles que les installations pétrochimiques par exemple, un joint d'étanchéité constitué de graphite peut effectivement d'une part résister au feu, mais d'une autre part ne peut pas résister à la corrosion chimique de certains éléments circulants à l'intérieur d'une vanne ou d'un conduit. Également, un joint en PTFE peut d'une part résister à la corrosion chimique mais d'une autre part ne peut pas résister au feu.

En particulier, pour avoir la qualité "anti-feu", un joint d'étanchéité doit généralement être conforme à un test (par exemple, ISO 10497 ou API 607, BS6755, etc....) dans lequel une vanne ou une bride assemblée au moyen de ce joint est soumise à une haute température ou à une flamme nue pendant une période de temps fixée (normalement 30 minutes). La norme impose qu'une fuite provenant de la vanne ou de la bride ne peut pas dépasser une certaine quantité limitée, dans un délai donné (15 minutes). L'importance dudit test est évidemment critique pour la plupart des applications telles que par exemple le transport d'un liquide très corrosif (par exemple, de l'acide sulfurique concentré) ou des liquides inflammables dont toutes fuites pendant un feu peuvent être désastreuses.

Le PTFE conventionnel ou pur présente d'une part une haute inertie chimique et d'une autre part une basse résistance au fluage. Ceci limite ou exclut l'utilisation d'un tel matériau dans les applications exigeant la résistance à long terme au fluage.

Le PTFE chargé est un autre matériau typiquement utilisé pour la réalisation de joints d'étanchéité. Par rapport au PTFE pur, le PTFE chargé a une résistance au fluage plus élevé. Cependant, dû à la présence des éléments de charge (tels que du graphite ou du verre), le PTFE chargé a une compressibilité de 10 à 15% avec une pression de surface de 40 N/mm² et une résistance chimique plus petite. Ceci limite ou exclut l'utilisation d'un tel matériau dans des applications exigeant une inertie chimique très élevée.

Le graphite ainsi que le PTFE peuvent être produit sous une forme expansée (forme poreuse) comme décrit, respectivement, dans les documents US3953566 et US3885007**.** En particulier le PTFE expansé (ePTFE) a une plus haute résistance au fluage par rapport au PTFE pur, et une plus haute inertie chimique par rapport au PTFE chargé. Le graphite expansé a une meilleure résistance au fluage et au feu par rapport au graphite conventionnel.

Le document FR2573837 décrit un joint d'étanchéité annulaire plat composé de graphite expansé moulé et de métal. Plus précisément, il comporte une âme annulaire 7 en graphite expansé et moulée entre deux anneaux métalliques intérieur 5 et extérieur 4. Les matériaux utilisés pour les anneaux extérieur et intérieur sont notamment : les aciers inoxydables ou les alliages de nickel. Cependant, l'utilisation d'un tel joint ne permet pas de réaliser une étanchéité qui résiste d'une part aux produits chimiques et d'une autre part au feu.

On connaît également par EP0705998B1 un joint d'étanchéité composé d'un matériau présentant une construction interne lamellaire pour restreindre et éviter toute fuite par infiltration. Dans ce joint, une extrémité extérieure (1A1) d'un matériau de base intérieur de type feuille (1A) et une extrémité intérieure (1B1) d'un matériau de base extérieur de type feuille (1 B) se recouvrent l'une l'autre partiellement. Les matériaux de base intérieur et extérieur de type feuille sont adjacents l'un par rapport à l'autre et sont formés par pression de telle sorte que leur totalité, y compris la partie recouverte (2) présente une épaisseur uniforme. Cependant, ce type de joint présente un inconvénient dû à la complexité de l'opération de chevauchement des deux extrémités (1A1, 1 B1), ce qui représente un coût de fabrication non négligeable, et limite les formes des joints réalisables aux joints circulaires. En outre, ce joint n'assure pas correctement l'étanchéité en raison du fait que les deux matériaux ont deux valeurs différentes de compressibilité, ce qui ne permet pas de répartir également les forces de serrage entre les deux portions du joint. De plus, comme déjà mentionné, le PTFE conventionnel présente une basse résistance à la traction ainsi qu'une basse résistance au fluage, ce qui représente une limitation pour l'étanchéité du joint.

On connaît également par le produit commercial **Flexidram,** de la société Flexitallic, un joint d'étanchéité hybride composé d'un anneau intérieur en PTFE chargé (« Sigma 501 ») et d'un anneau extérieur métallique strié, en acier inoxydable 316 (« Flexpro ») recouvert de part et d'autre d'une couche de graphite (« Flexcarb »). L'anneau extérieur est fabriqué par tournage, ce qui représente un coût de fabrication non négligeable, et limite les formes des joints réalisables aux joints circulaires. Le choix et l'agencement des matériaux choisis permettent difficilement de répartir les forces de serrage entre les deux portions du joint. De plus, l'usage de PTFE chargé, imposé pour réduire la compressibilité de la portion intérieure du joint, réduit la résistance chimique du PTFE.

On connaît enfin par le document EP1293709A1 un joint d'étanchéité comportant une portion extérieure et une portion intérieure. La portion extérieure est réalisée dans un matériau présentant une résistance aux températures élevées et une résistance mécanique supérieures aux résistances correspondantes de la portion intérieure. La portion intérieure assure la fonction d'étanchéité, alors que la portion extérieure assure la fonction de résistance mécanique, évitant ainsi les risques de fluage de la portion intérieure. Cependant, en cas d'incendie, le matériau de la portion intérieure ne résistera pas, et le matériau de la portion extérieure, conçu pour assurer la résistance mécanique, étant trop rigide, ne pourra pas assurer l'étanchéité.

Un joint plat destiné à assurer une bonne étanchéité afin d'empêcher une fuite pendant des situations d'incendie est actuellement inconnu.

Donc, il existe un besoin pour un joint qui fournisse une étanchéité efficace qui puisse être utilisé avec des produits chimiques corrosifs et qui fournisse une mesure de protection en cas d'incendie.

L'invention a pour but de fournir un joint d'étanchéité ne présentant pas tous les désavantages de l'art antérieur.

En particulier, l'invention a pour but de fournir un joint qui permet de réaliser une étanchéité qui résiste à la corrosion des produits chimiques à l'intérieur d'une canalisation ou d'un réservoir et aux températures élevée à l'extérieur de la canalisation ou du réservoir en cas d'incendie.

### RESUME DE L'INVENTION

La présente invention se rapporte à un joint anti-feu pour assurer l'étanchéité de volumes contenant des fluides, lesdits volumes étant assemblés au moyen de brides à faces planes, comprenant une portion extérieure réalisable par découpe à partir d'une feuille d'un matériau expansé résistant au feu, ledit matériau présentant une porosité à l'état non serré et devenant étanche lors d'une compression supérieure à un premier seuil ; une portion intérieure réalisable par découpe à partir d'une feuille d'un matériau résistant aux dits fluides présentant une porosité à l'état non serré et devenant étanche lors d'une compression supérieure à un second seuil; la surface extérieure de la portion intérieure étant adjacente et en contact avec la surface intérieure de la portion extérieure ; dans lequel le matériau résistant aux dits fluides est un matériau expansé et la surface de la portion extérieure en contact avec une bride à face plane, la surface de la portion intérieure en contact avec ladite bride à face plane et les épaisseurs des matériaux expansés sont choisis de telle sorte, que lors du serrage des dites brides, les deux matériaux atteignent respectivement le premier et le second seuil de compression simultanément.

Dans un mode de réalisation préféré le matériau expansé résistant au feu est un graphite expansé.

De préférence le matériau expansé résistant aux fluides est le polytétrafluoroéthylène expansé.

De préférence les épaisseurs du matériau expansé résistant aux fluides et du matériau expansé résistant au feu sont dans un rapport compris entre 1.25 et 1.75, et préférablement 3/2.

Avantageusement, ledit premier seuil de compression est 40% et ledit deuxième seuil de compression est 60%.

De préférence, la surface de la portion extérieure en contact avec une bride à face plane et la surface de la portion intérieure en contact avec ladite bride à face plane sont dans un rapport compris entre 0,8 et 1,2, et préférablement, ces surfaces sont sensiblement égales.

Avantageusement, la portion extérieure et la portion intérieure sont solidarisées par collage au moyen d'une colle blanche.

Plus avantageusement, la portion extérieure et la portion intérieure sont des anneaux circulaires plats concentriques.

Avantageusement, le joint est découpé suivant une forme complexe adaptée à la forme du volume à assembler.

La présente invention se rapporte également à l'utilisation d'un joint anti-feu dans une installation soumise à des impératifs de sécurité anti-feu.

### BREVE DESCRIPTION DES FIGURES

La figure 1 représente un exemple de joint, suivant l'invention, en coupe axiale.

La figure 2 représente une vue en perspective de la coupe de la figure 1.

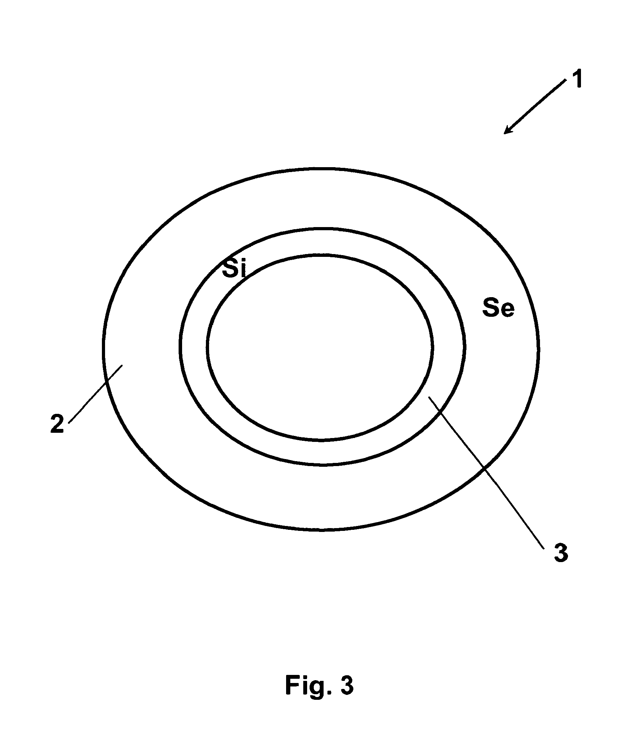

La figure 3 représente une vue de dessus d'un joint suivant l'invention.

La figure 4 et 5 représentent une vue de dessus des exemples de formes non circulaires de joints qui peuvent être réalisés suivant l'invention.

### DESCRIPTION DETAILLEE D'UNE FORME D'EXECUTION PREFEREE DE L'INVENTION

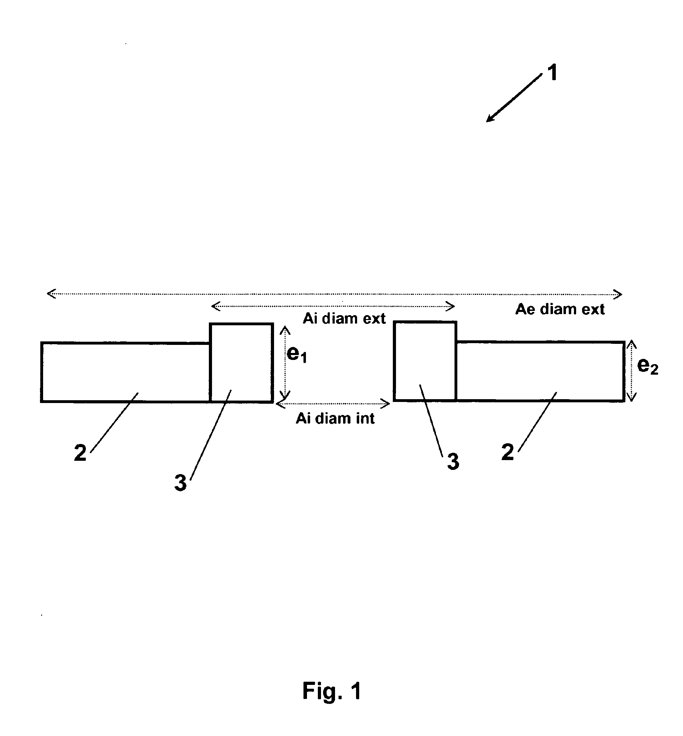

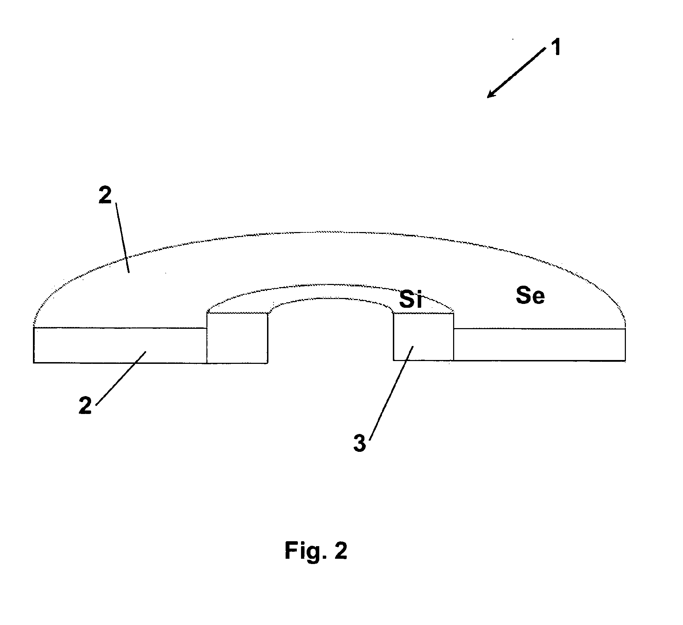

La fig. 1 et la fig. 2 représentent respectivement un exemple de joint, suivant l'invention, en coupe axiale et une vue en perspective du même joint 1, en position non serrée. Ce joint 1 comprend un anneau circulaire extérieur 2 en graphite expansé avec un insert en acier inoxydable déployé 1.4401 de haute résistance à la corrosion (non montré). Le graphite expansé de l'anneau 2 a une pureté supérieure à 98% et peut résister à des températures comprises entre -200°C et 450°C en atmosphère oxydante et jusqu'à 900° C en atmosphère non oxydante. La société Frenzelit propose une matériau, livrable en feuilles de 1500mm su 1500 mm, et d'épaisseur 2mm, sous le nom commercial Novaphit® SSTC, à partir duquel l'anneau extérieur 2 peut être découpé. D'autres épaisseurs sont également disponibles. Le joint 1 comprend également un anneau circulaire intérieur 3 en PTFE expansé et multidirectionnel. Cet anneau intérieur 3 est concentrique et adjacent à l'anneau extérieur 2 de telle sorte de constituer un seul anneau. Le PTFE expansé peut résister à des températures continues comprises entre - 210°C et 260°C, et a une résistance chimique très élevée ainsi qu'une meilleure résistance à la traction. En particulier, le PTFE expansé résiste à tous les agents dont le PH est compris entre 0 et 14. La société Gore propose un matériau, également livrables en feuilles de 1500 mm sur 1500 mm, et d'épaisseur 3 mm, sous le nom commercial Gore-Tex® GR, à partir duquel l'anneau intérieur 3 peut être découpé. Dans le joint 1 suivant l'invention on combine les qualités des deux matériaux : d'une part la résistance au feu du graphite expansé et d'une autre part l'haute inertie chimique du PTFE expansé.

L'épaisseur du matériau de l'anneau intérieur 3 est visiblement plus grande que l'épaisseur du matériau de l'anneau extérieur 2. Plus précisément, le graphite expansé, ayant une compressibilité plus petite que la compressibilité du PTFE expansé, a une épaisseur e₂ plus petite que l'épaisseur e₁ du PTFE expansé. Les épaisseurs du PTFE expansé et du graphite expansé sont choisies dans un rapport de 3 à 2, afin d'assurer que, lors du serrage, les deux matériaux atteignent le rapport de compression optimal assurant l'étanchéité, les épaisseurs finales de deux matériaux étant égales. Dans un mode préféré de l'invention, le graphite expansé, ayant une compressibilité d'environ 40%, a une épaisseur e₂ égale à 2mm et l'épaisseur e₁ du PTFE expansé est égale à 3 mm, ce dernier ayant une compressibilité de 60%. Ce choix permet lors du serrage du joint 1 d'assurer que l'épaisseur finale de deux matériaux soit de 1,2 mm. Le PTFE expansé a une porosité presque nulle et une résistance au fluage très élevée lors d'une compression de minimum 60% avec une pression de surface de 35 à 40 N/mm². Le graphite expansé a également une très basse porosité et une résistance très élevée au fluage lors d'une compression de minimum 40% avec la même pression de surface. Par conséquent, lors du serrage le graphite expansé et le PTFE expansé présentent la même capacité d'étanchéité, puisque les deux matériaux atteignent simultanément une densification suffisant à assurer un serrage uniforme du joint 1.

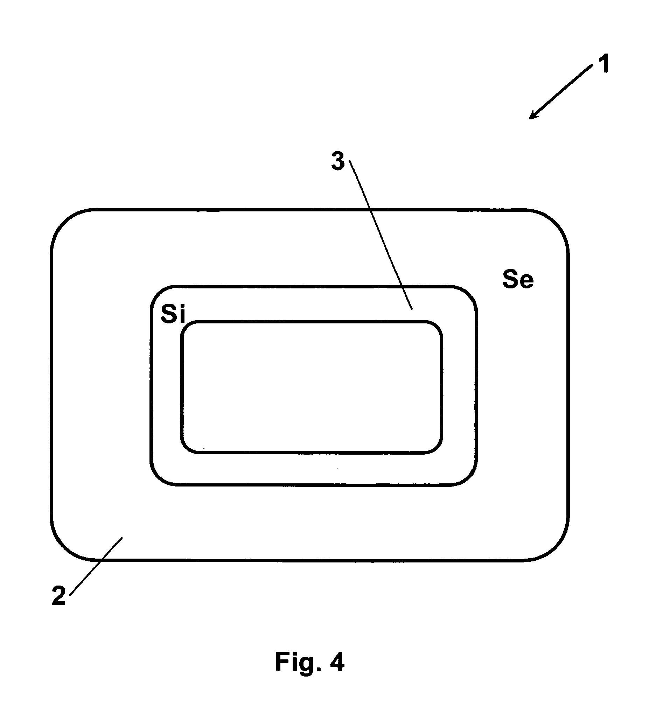

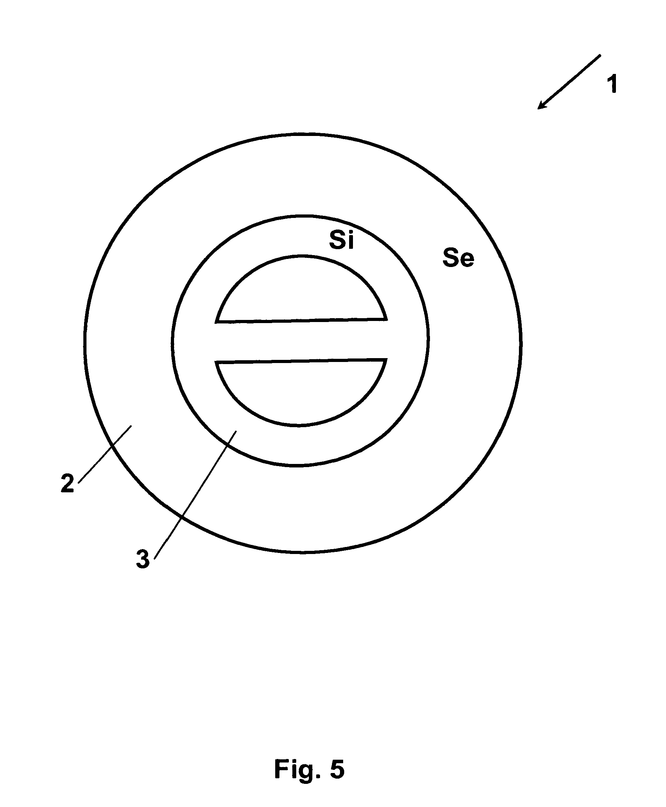

L'anneau extérieur 2 et l'anneau intérieur 3 du joint 1 sont découpés hors de plaques et, par conséquent, le joint 1 peut présenter un nombre de formes et diamètres non limité, contrairement aux joints conventionnels métalliques (spiralés, striés, etc....) qui sont limités à des formes circulaires ou ovales. Les **fig. 4** **et** **5** représentent des exemples de formes non circulaires de joints qui peuvent être réalisés suivant l'invention, et peuvent trouver des applications telles que trous d'homme, couvercle de cuve ou de réacteur, joints d'échangeur de chaleur **(****fig. 5****)** etc. La découpe peut être réalisé avec des différents outils tels que : l'estampage avec outillage (emporte-pièce); poinçons concentriques ; outillages spéciaux (supports en bois portant des lames); table de découpe à jet d'eau ou à couteau oscillant, etc.

Le tableau ci-après, dans lequel les dimensions sont exprimées en mm et les surfaces en mm2, montre une liste (non-exhaustive) de dimensions du joint 1 suivant l'invention dont les diamètres intérieur (diam int) et extérieur (diam ext) sont conformes à la norme EN 1514-1 (dimensions métriques européennes). Les dimensions des diamètres desdits anneaux sont choisies de telle sorte que la surface de l'anneau extérieur en contact avec la bride (Se) et celle de l'anneau intérieur en contact avec la bride (Si) soient dans un rapport (Se/Si) de 1. La première colonne de ce tableau représente la pression nominale du joint (PN) en bar; la deuxième colonne représente le diamètre nominal de la tuyauterie (diam nom). Les diamètres intermédiaires (diam ie) ont été calculés pour obtenir le rapport Se/Si de 1. Pour cela, le demandeur a tenu compte du diamètre extérieur de la face surélevée de la bride standard suivant EN 1092-1 (diam rf). Le résultat de ce calcul est ensuite arrondi à l'unité supérieure pour le diamètre extérieur de l'anneau intérieur (AI diam ext). Le diamètre intérieur de l'anneau extérieur (AE diam int) est diminué de 1 mm pour les diamètres nominaux inférieurs à 300 et de 2 mm pour les diamètres supérieurs à 300, et cela afin d'assurer un léger serrage entre les deux joints et permettre facilement leur collage. Toutes les autres listes de dimensions (normalisées ou pas) seront réalisées suivant la même méthode afin d'assurer un serrage uniforme des deux matières et une même capacité d'étanchéité (densification suffisante dans chaque cas).

| PN | diam nom | diam int | diam ie | diam ext | diam rf | Si | Se | Se/Si | AI int | AI ext | AE int | AE ext |
|---|---|---|---|---|---|---|---|---|---|---|---|---|
| 10 | 10 | 18 | 31,0 | 46 | 40 | 501 | 501 | 1,00 | 18 | 31,0 | 30,0 | 46 |
| 10 | 15 | 22 | 35,4 | 51 | 45 | 605 | 605 | 1,00 | 22 | 35,0 | 34,0 | 51 |
| 10 | 20 | 27 | 45,2 | 61 | 58 | 1035 | 1035 | 1,00 | 27 | 45,0 | 44,0 | 61 |
| 10 | 25 | 34 | 53,8 | 71 | 68 | 1362 | 1362 | 1,00 | 34 | 53,0 | 52,0 | 71 |
| 10 | 100 | 115 | 138,2 | 162 | 158 | 4610 | 4610 | 1,00 | 115 | 138,0 | 137,0 | 162 |
| 10 | 125 | 141 | 166,2 | 192 | 188 | 6070 | 6070 | 1,00 | 141 | 166,0 | 165,0 | 192 |
| 10 | 150 | 169 | 191,7 | 218 | 212 | 6435 | 6435 | 1,00 | 169 | 191,0 | 190,0 | 218 |
| 10 | 200 | 220 | 245,2 | 273 | 268 | 9200 | 9200 | 1,00 | 220 | 245,0 | 244,0 | 273 |
| 10 | 250 | 273 | 297,4 | 328 | 320 | 10945 | 10945 | 1,00 | 273 | 297,0 | 295,0 | 328 |
| 10 | 300 | 324 | 347,8 | 378 | 370 | 12535 | 12535 | 1,00 | 324 | 347,0 | 345,0 | 378 |
| 10 | 350 | 356 | 394,7 | 438 | 430 | 22842 | 22842 | 1,00 | 356 | 394,0 | 392,0 | 438 |
| 10 | 400 | 407 | 446,1 | 489 | 482 | 26182 | 26182 | 1,00 | 407 | 446,0 | 444,0 | 489 |
| 16 | 10 | 18 | 31,0 | 46 | 40 | 501 | 501 | 1,00 | 18 | 31,0 | 30,0 | 46 |
| 16 | 15 | 22 | 35,4 | 51 | 45 | 605 | 605 | 1,00 | 22 | 35,0 | 34,0 | 51 |
| 16 | 20 | 27 | 45,2 | 61 | 58 | 1035 | 1035 | 1,00 | 27 | 45,0 | 44,0 | 61 |

Les matériaux choisi pour les anneaux intérieur 3 et extérieur 2 ne requièrent que de faibles pressions de surface pour atteindre leur seuil d'étanchéité. Ces pressions de surface peuvent aisément être atteintes par les brides normalisées. A titre d'exemple, une bride suivant la norme DIN, PN 10, DN 10, présentant 4 boulons M12 permet d'atteindre une pression de surface de 76N/mm2, ce qui est largement suffisant pour atteindre les seuls requis par les matériaux.

Le demandeur a observé que, de manière inattendue, il était possible de fabriquer un joint suivant les caractéristiques ci-dessus, ce joint ayant des propriétés de résistance au feu très favorables.

Dans une variante de l'invention le graphite expansé peut être remplacé par un autre matériau résistant au feu, tel que, par exemple, le mica.

Le joint 1 est destiné typiquement à la réalisation d'étanchéités entre les surfaces parallèles de raccords à brides jusque à une température extérieure de 450° C environ en atmosphère oxydante et jusqu'à 900° C en atmosphère non oxydante, dans des conditions corrosives et à des pressions de surface (pressions appliquées sur le joint) allant jusqu'à 170 N/mm² pour le graphite expansé et 150 N/mm² pour le PTFE expansé. D'excellents résultats sont obtenus sur les assemblages où des faibles forces de serrages sont présentes, comme les brides à basse pression avec une pression de surface minimum 15 à 20 N/mm². En particulier, le joint 1 respecte les exigences très sévères du test au feu ISO 10497.

Le tableau ci-après montre une synthèse des résultats du test au feu du joint 1 de l'invention suivant la norme ISO 10497 en présence de feu avec une pression moyenne de 2.3 bar. Dans ce test, le joint 1 de l'invention a été serré dans une bride qui a été soumise à un feu nu pendant 30 min. Quatre sondes thermiques (S1 ; S2 ; S3 ; S4) ont été placées à l'intérieur de la bride à une profondeur de 13 mm et deux autres sondes (S5 ; S6) à l'extérieur de la bride à une distance de 25 mm de la bride. Les températures mesurées par les six sondes ont été enregistrées. Aucune fuite n'a été observée pendant les 30 minutes de présence du feu. Une fuite réduite, admissible suivant la norme, a été observée pendant la période de refroidissement. Le joint 1 est donc conforme au test au feu suivant ISO 10497, qui a été effectué par un organisme agrée.

| Temps | Pression | S1 | S2 | S3 | S4 | S5 | S6 |
|---|---|---|---|---|---|---|---|
| (min) | (bar) | (°C) | (°C) | (°C) | (°C) | (°C) | (°C) |
| 0 | 2 | 20 | 20 | 20 | 20 | 20 | 20 |
| 2,5 | 2 | 151 | 159 | 124 | 141 | 896 | 856 |
| 5 | 2,4 | 222 | 200 | 179 | 200 | 951 | 907 |
| 7,5 | 2 | 267 | 241 | 221 | 238 | 949 | 903 |
| 10 | 2,2 | 304 | 275 | 252 | 269 | 951 | 872 |
| 12,5 | 1,7 | 330 | 299 | 275 | 290 | 950 | 890 |
| 15 | 1,9 | 356 | 323 | 294 | 310 | 948 | 899 |
| 17,5 | 2 | 380 | 347 | 313 | 327 | 948 | 868 |
| 20 | 1,8 | 402 | 370 | 333 | 346 | 943 | 886 |
| 22,5 | 6,4 | 427 | 394 | 356 | 364 | 934 | 896 |
| 25 | 6,5 | 452 | 419 | 380 | 384 | 931 | 864 |
| 27,5 | 2,7 | 473 | 439 | 403 | 407 | 952 | 888 |
| 30 | 2 | 497 | 463 | 427 | 426 | 932 | 891 |

## Revendications

1. Joint anti-feu (1) pour assurer l'étanchéité de volumes contenant des fluides, lesdits volumes étant assemblés au moyen de brides à faces planes, comprenant :
- une portion extérieure (2) réalisable par découpe à partir d'une feuille d'un matériau expansé résistant au feu, ledit matériau présentant une porosité à l'état non serré et devenant étanche lors d'une compression supérieure à un premier seuil ;
- une portion intérieure (3) réalisable par découpe à partir d'une feuille d'un matériau résistant aux dits fluides présentant une porosité à l'état non serré et devenant étanche lors d'une compression supérieure à un second seuil;
la surface extérieure de la portion intérieure étant adjacente et en contact avec la surface intérieure de la portion extérieure ;
**caractérisé en ce que** ledit matériau résistant aux dits fluides est un matériau expansé et la surface de la portion extérieure (Se) en contact avec une bride à face plane, la surface de la portion intérieure (Si) en contact avec ladite bride à face plane et les épaisseurs (e₁ ; e₂) des matériaux expansés sont choisis de telle sorte, que lors du serrage des dites brides, les deux matériaux atteignent respectivement le premier et le second seuil de compression simultanément.

2. Joint anti-feu (1) suivant la revendication 1, **caractérisé en ce que** le matériau expansé résistant au feu est un graphite expansé.

3. Joint anti-feu suivant l'une quelconque des revendications précédentes, **caractérisé en ce que** le matériau expansé résistant aux fluides est le polytétrafluoroéthylène expansé.

4. Joint anti-feu suivant l'une quelconque des revendications précédentes, **caractérisé en ce que** les épaisseurs (e₁ ; e₂) du matériau expansé résistant aux fluides et du matériau expansé résistant au feu sont dans un rapport compris entre 1.25 et 1.75.

5. Joint anti-feu (1) suivant l'une quelconque des revendications précédentes, **caractérisé en ce que** ledit premier seuil de compression est 40% et ledit deuxième seuil de compression est 60%.

6. Joint anti-feu (1) suivant l'une quelconque des revendications précédentes, **caractérisé en ce que** la surface de la portion extérieure (Se) en contact avec une bride à face plane et la surface de la portion intérieure (Si) en contact avec ladite bride à face plane sont dans un rapport compris entre 0,8 et 1,2.

7. Joint anti-feu (1) suivant l'une quelconque des revendications précédentes, **caractérisé en ce que** la portion extérieure (2) et la portion intérieure (3) sont solidarisées par collage au moyen d'une colle blanche.

8. Joint anti-feu (1) suivant l'une quelconque des revendications précédentes, **caractérisé en ce que** la portion extérieure (2) et la portion intérieure (3) sont des anneaux circulaires plats concentriques.

9. Joint anti-feu (1) suivant l'une quelconque des revendications 1 à 7, **caractérisé en ce qu'**il est découpé suivant une forme complexe adaptée à la forme du volume à assembler.

10. Utilisation d'un joint anti-feu (1) suivant l'une quelconque des revendications précédentes dans une installation soumise à des impératifs de sécurité anti-feu.

## Patentansprüche

1. Brandschutzdichtung (1) zur Abdichtung von Fluiden enthaltenden Volumen, die mittels Flanschen mit ebenen Flächen montiert sind, mit
- einem äußeren Abschnitt (2), der durch Abschneiden von einer Folie eines expandierten Flammschutzmaterials herstellbar ist, das im nicht festgeklemmten Zustand eine Porosität aufweist und bei einer über einer ersten Schwelle liegenden Komprimierung dichtend wird,
- einem inneren Abschnitt (3), der durch Abschneiden von einer Folie eines gegen die Fluide beständigen Materials herstellbar ist, das im nicht festgeklemmten Zustand eine Porosität aufweist und bei einer über einer zweiten Schwelle liegenden Komprimierung dichtend wird,
wobei die Außenfläche des inneren Abschnitts der Innenfläche des äußeren Abschnitts benachbart ist und mit ihr in Kontakt steht,
**dadurch gekennzeichnet, dass** das gegen die Fluide beständige Material ein expandiertes Material ist und die Oberfläche des äußeren Abschnitts (Se) in Kontakt mit einem Flansch mit ebener Fläche, die Oberfläche des inneren Abschnitts (Si) in Kontakt mit dem Flansch mit ebener Fläche und die Dicken (e₁; e₂) der expandierten Materialien so gewählt sind, dass die beiden Materialien beim Festklemmen der Flanschen jeweils die erste und die zweite Kompressionsschwelle gleichzeitig erreichen.

2. Brandschutzdichtung (1) nach Anspruch 1, **dadurch gekennzeichnet, dass** das expandierte Flammschutzmaterial ein Blähgraphit ist.

3. Brandschutzdichtung nach einem der vorhergehenden Ansprüche, **dadurch gekennzeichnet, dass** das expandierte, gegen die Fluide beständige Material expandiertes Polytetrafluorethylen ist.

4. Brandschutzdichtung nach einem der vorhergehenden Ansprüche, **dadurch gekennzeichnet, dass** die Dicken (e₁; e₂) des expandierten, gegen die Fluide beständigen Materials und des expandierten Flammschutzmaterials in einem Verhältnis zwischen 1,25 und 1,75 sind.

5. Brandschutzdichtung (1) nach einem der vorhergehenden Ansprüche, **dadurch gekennzeichnet, dass** die erste Kompressionsschwelle 40% ist und die zweite Kompressionsschwelle 60% ist.

6. Brandschutzdichtung (1) nach einem der vorhergehenden Ansprüche, **dadurch gekennzeichnet, dass** die Oberfläche des äußeren Abschnitts (Se) in Kontakt mit einem Flansch mit ebener Fläche und die Oberfläche des inneren Abschnitts (Si) in Kontakt mit dem Flansch mit ebener Fläche in einem Verhältnis zwischen 0,8 und 1,2 sind.

7. Brandschutzdichtung (1) nach einem der vorhergehenden Ansprüche, **dadurch gekennzeichnet, dass** der äußere Abschnitt (2) und der innere Abschnitt (3) durch Kleben mittels Weißleims fest miteinander verbunden sind.

8. Brandschutzdichtung (1) nach einem der vorhergehenden Ansprüche, **dadurch gekennzeichnet, dass** der äußere Abschnitt (2) und der innere Abschnitt (3) kreisförmige, ebene, konzentrische Ringe sind.

9. Brandschutzdichtung (1) nach einem der Ansprüche 1 bis 7, **dadurch gekennzeichnet, dass** sie nach einer komplexen Form abgetrennt ist, die an die Form des zu montierenden Volumens angepasst ist.

10. Verwendung einer Brandschutzdichtung (1) nach einem der vorhergehenden Ansprüche in einer Anlage, die Brandschutzanforderungen unterworfen ist.

## Claims

1. Fire-resistant seal (1) for sealing volumes containing fluids, the said volumes being assembled by means of flat-faced flanges, comprising:
- an outer portion (2) that can be made by cutting from a sheet of a fire-resistant expanded material, the said material having a porosity in the uncompressed state and becoming leak-proof during a compression greater than a first threshold;
- an inner portion (3) that can be made by cutting from a sheet of a material resistant to the said fluids having a porosity in the uncompressed state and becoming leak-proof during a compression greater than a second threshold;
the outer surface of the inner portion being adjacent to and in contact with the inner surface of the outer portion;
**characterized in that** the said material resistant to the said fluids is an expanded material and the surface of the outer portion (Se) in contact with a flat-faced flange, the surface of the inner portion (Si) in contact with the said flat-faced flange and the thicknesses (eᵢ; e₂) of the expanded materials are chosen such that, when the said flanges are compressed, the two materials reach respectively the first and the second compression threshold simultaneously.

2. Fire-resistant seal (1) according to Claim 1, **characterized in that** the fire-resistant expanded material is an expanded graphite.

3. Fire-resistant seal according to either one of the preceding claims, **characterized in that** the fluid-resistant expanded material is expanded polytetrafluoroethylene.

4. Fire-resistant seal according to any one of the preceding claims, **characterized in that** the thicknesses (e₁; e₂) of the fluid-resistant expanded material and of the fire-resistant expanded material are in a ratio of between 1.25 and 1.75.

5. Fire-resistant seal (1) according to any one of the preceding claims, **characterized in that** the said first compression threshold is 40% and the said second compression threshold is 60%.

6. Fire-resistant seal (1) according to any one of the preceding claims, **characterized in that** the surface of the outer portion (Se) in contact with a flat-faced flange and the surface of the inner portion (Si) in contact with the said flat-faced flange are in a ratio of between 0.8 and 1.2.

7. Fire-resistant seal (1) according to any one of the preceding claims, **characterized in that** the outer portion (2) and the inner portion (3) are secured by bonding by means of a PVA glue.

8. Fire-resistant seal (1) according to any one of the preceding claims, **characterized in that** the outer portion (2) and the inner portion (3) are concentric flat circular rings.

9. Fire-resistant seal (1) according to any one of Claims 1 to 7, **characterized in that** it is cut in a complex shape adapted to the shape of the volume to be assembled.

10. Use of a fire-resistant seal (1) according to any one of the preceding claims in an installation subjected to fire safety requirements.
